# EUROPEAN PATENT APPLICATION

(11) **EP 2 475 076 A1**
(43) Date of publication of application: **11.07.2012**
(21) Application number: 11150165.6
(22) Date of filing: 05.01.2011
(51) Int. Cl.: H02K 3/30, H02K 3/34

(54) **Method for manufacturing a stator and a stator bar, stator and stator bar**

(71) Applicant: Alstom Technology Ltd, 5400 Baden (CH)
(72) Inventor: Anderton, Alexander Rene, CH-5600, Lenzburg (CH); Stoll, Dieter, CH-5507, Mellingen (CH); Vezzoli, Massimiliano, CH-5236, Remigen (CH)

(57) **Abstract**

A method for manufacturing a stator bar (1) comprises providing a conductor (2) with an insulation (4) around it, and wrapping an expandable tape (5) around the insulation (4). The stator bar can be used to manufacture a stator.

## Description

### TECHNICAL FIELD

The present invention relates to a method for manufacturing a stator and a stator bar, and to a stator and a stator bar.

### BACKGROUND OF THE INVENTION

Rotating electric machines have a stator core typically having a plurality of stacked metal sheets. The stator core has slots that house stator bars.

For electrical and thermal reasons, the stator bars must adhere to the slot surfaces over their whole length; in particular voids and gaps between the stator bars and the slot surfaces should be avoided, because they would hinder the transmission of the heat generated within the stator bars to the stator core.

In order to fill the space between conductors and slots, WO 2008/145190 discloses a laminate comprising a substrate, a support and a filler that is able to expand under given conditions. In addition also a filler having high thermal conductivity can be provided. According to WO 2008/145190 the laminate is applied onto the surfaces of stator or rotor slots and the conductors are then inserted into them. Afterwards, heat is applied to expand the laminate and fill all possible gaps between the conductors and the slot surfaces.

This way of applying the laminate is quite unsatisfactory for the stator core of large electric machines, because of the practical difficulties of laying down the laminate within a deep slot, and the need of inserting very large and heavy stator bars into the slots (whose surfaces are covered with the laminate) without impairing the laminate.

### SUMMARY OF THE INVENTION

The technical aim of the present invention therefore includes providing a method for manufacturing a stator bar, a method for manufacturing a stator, and indicating a stator bar and a stator addressing the aforementioned problems of the known art.

Within the scope of this technical aim, an aspect of the invention is to provide a method for manufacturing a stator by which insertion of the stator bars into the stator slots with the interposition of an expandable laminate is very easy.

The technical aim, together with these and further aspects, are attained in accordance with the accompanying claims.

### BRIEF DESCRIPTION OF THE DRAWINGS

Further characteristics and advantages of the invention will be more apparent from the description of preferred but non-exclusive embodiments of the methods, stator and a stator bar, illustrated by way of non-limiting example in the accompanying drawings, in which:
Figures 1 and 2 show a stator bar having an expandable tape respectively before and after expansion;
Figures 3 and 4 show a stator slot containing two stator bars respectively before and after expansion;
Figure 5 schematically shows an example of an expandable tape; and
Figure 6 schematically shows an example of an expandable tape different from the one of figure 5.

### DETAILED DESCRIPTION OF EMBODIMENTS OF THE INVENTION

### METHOD FOR MANUFACTURING A STATOR BAR

The method for manufacturing a stator bar 1 comprises the traditional steps of providing a conductor 2; typically the conductor 2 has a plurality of transposed conductive elements 3 (Roebel bar) slightly insulated between each other.

Around this conductor an insulation 4 is provided.

For this reason, an insulating tape (such as a mica tape) is wrapped around the conductor 2. Then the insulating tape is impregnated with a resin and the resin is finally cured to realise the insulation 4 having the required electrical features (this is the well known VPI process).

Naturally also different processes to manufacture the insulation 4 around the conductors 2 are possible, such as the resin rich method (also this method is well known and not described in detail).

Thus, the method comprises the further step of wrapping an expandable tape 5 around the insulation 4.

According to the needs, one or also more than one layers of expandable tape 5 can be wrapped around the insulation 4, such that, after expansion, the required thickness can be obtained.

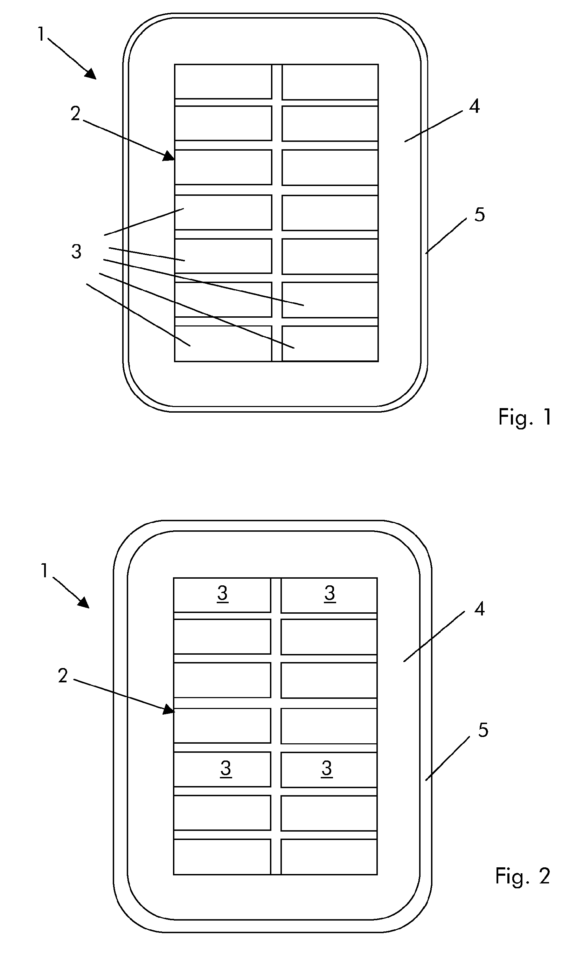

Figure 1 shows an example of a stator bar cross section having the expandable tape 5 wrapped around the insulation 4, before its expansion and figure 2 shows a cross section of the same stator bar 1 of figure 1 but after the expandable tape 5 has expanded.

The expandable tape 5 can have different features but preferably it is a heat expandable tape, i.e. a tape that expands when it is heated above a given temperature.

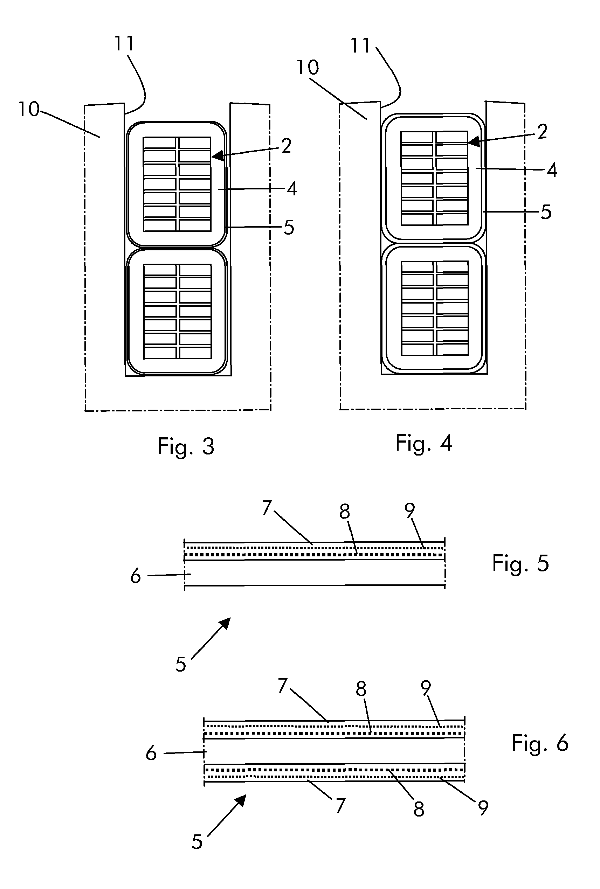

Figures 5 and 6 show examples of expandable tapes 5 that can be wrapped around the insulation 4.

The expandable tape 5 has a woven or non woven substrate 6, for example of glass fibres, that carries at one side (figure 5) or both sides (figure 6) a B stage resin, such as an epoxy resin 7.

The resin 7 contains a filler 8 having expandable properties; for example Expancel® or Advancell® can be used.

In addition, the resin can also contain fillers 9 improving the thermal conductivity and/or fillers improving the electric features and/or fillers improving the mechanical stability; for example Boron nitride or alumina (aluminium oxide), graphite, carbon black, carbon nanotubes, clay, clay nano-platelets, silicon carbide, powdered silica, aluminium hydroxide, and titanium dioxide can be used as fillers.

Typically the fillers 8 and 9 are uniformly contained within the resin 7.

Alternatively the expandable tape can also be a tape whose expansion on demand is triggered with different means, such as for example chemically, electromagnetically, mechanically, etc.

### STATOR BAR

The stator bar manufactured according to the method in embodiments of the invention comprises the conductor 2 having the insulation 4 around it and, around the insulation 4, the expandable tape 5 that preferably is a heat expandable tape.

### METHOD FOR MANUFACTURING A STATOR

The method for manufacturing a stator of an electric machine comprises first providing a stator core 10 with longitudinal slots 11.

Thus a plurality of conductors 2 (preferably transposed conductive elements 3) are provided; then the insulation 4 and the expandable tape 5 are also provided around the conductors 2.

Then the conductors 2 with the insulation 4 and expandable tape 5 are housed into the slots 11.

The expandable tape 5 wrapped around the insulation 4 of each conductor 2 is expanded after the conductors 2 (with the insulation 4 and expandable tape 5) have been housed within the slots 11.

Selected conductor ends are connected together to form stator windings.

Since preferably the expandable tape 5 is a heat expandable tape, its expansion is achieved by heating. For example this can be done during the final thermal treatments of the stator core.

Introduction of the stator bar within the slots 11 is very easy, since they have smaller dimensions than the slots.

In addition, after expansion the expandable tape 5 is able to completely fill all voids and gaps between the insulation 4 and the slots 11, allowing optimal electric features and heat transport (from the conductors 2 to the stator core 10).

### STATOR

The stator manufactured according to the method in embodiments of the invention comprises a stator core 10 with the longitudinal slots 11 housing the stator bars 1 whose conductors are selectively connected together to form stator windings.

Naturally the features described may be independently provided from one another.

In practice the materials used and the dimensions can be chosen at will according to requirements and to the state of the art.

### REFERENCE NUMBERS

- 1: stator bar
- 2: conductor
- 3: conductive elements
- 4: insulation
- 5: expandable tape
- 6: substrate
- 7: resin
- 8: filler
- 9: filler
- 10: stator core
- 11: slot

## Claims

1. Method for manufacturing a stator of an electric machine, comprising:
- providing a stator core (10) with longitudinal slots (11);
- providing a plurality of conductors (2);
- providing an insulation (4) around each conductor,
- housing the conductors (2) with the insulation (4) into the slots (11),
- connecting selected conductor ends together to form stator windings,
**characterised by**:
- wrapping an expandable tape (5) around the insulation (4) of each conductor (2), before the conductors (2) with the insulation (4) are inserted into the slots (11),
- expanding the expandable tape (5) wrapped around the insulation (4) of each conductor (2), after the conductors (2) with insulation (4) have been housed within the slots (11).

2. Method according to claim 1, **characterised in that** the expandable tape (5) is a heat expandable tape that is expanded by heating.

3. Method according to claim 1, **characterised by** wrapping a plurality of layers of expandable tape (5).

4. Method according to claim 1, **characterised in that** in order to provide the insulation (4) these steps are carried out:
- wrapping an insulating tape around each conductor (2),
- impregnating the insulating tape of each conductor with a resin;
- curing the resin of each conductor to realise the insulation (4).

5. Stator of an electric machine comprising a stator core (10) with longitudinal slots (11) housing stator bars (1), each stator bar (1) comprising a conductor (2) with an insulation (4) around it, wherein selected stator bars (1) have conductor ends connected together to form stator windings, **characterised in that** around the insulation (4) of each conductor (2) an expandable tape (5) is wrapped, and **in that** the expandable tape (5) is in an expanded configuration.

6. Stator according to claim 5, **characterised in that** the insulation (4) is made of an insulating tape impregnated with a resin that is then cured.

7. Method for manufacturing a stator bar (1) comprising:
- providing a conductor (2);
- providing an insulation (4) around the conductor (2),
**characterised by** wrapping an expandable tape (5) around the insulation (4).

8. Method according to claim 7, **characterised in that** the expandable tape (5) is a heat expandable tape.

9. Method according to claim 7, **characterised by** wrapping a plurality of layers of expandable tape (5).

10. Method according to claim 7, **characterised in that** providing an insulation (4) around the conductor (2) includes:
- wrapping an insulating tape around the conductor (2),
- impregnating the insulating tape with a resin;
- curing the resin to realise the insulation (4).

11. Stator bar (1) comprising a conductor (2) having an insulation (4) around it, **characterised in that** around the insulation (4) an expandable tape (5) is wrapped.

12. Stator bar (1) according to claim 11, **characterised in that** the expandable tape (5) is a heat expandable tape.

13. Stator bar (1) according to claim 11, **characterised in that** the insulation (4) is made of an insulating tape impregnated with a resin that is then cured.
